# EUROPEAN PATENT APPLICATION

(11) **EP 4 772 568 A1**
(43) Date of publication of application: **08.07.2026**
(21) Application number: 24859702.3
(22) Date of filing: 26.08.2024
(51) Int. Cl.: C08L 7/00, C08L 23/00, C09K 3/00, F16F 15/08

(54) **VIBRATION DAMPING RUBBER COMPOSITION FOR ELECTRIC VEHICLE AND VIBRATION DAMPING RUBBER MEMBER FOR ELECTRIC VEHICLE**

(30) Priority: 30.08.2023 JP 2023140241
(71) Applicant: Prospira Corporation, Kanagawa prefecture 212-0013 (JP)
(72) Inventor: OCHIAI, Sho, Kawasaki city, Kanagawa 212-0013 (JP)
(74) Representative: Mewburn Ellis LLP
(86) International application number: PCT/JP2024/030251
(87) International publication number: WO 2025/047669

(57) **Abstract**

It is an object of the present invention to provide a vibration damping rubber member for an electric vehicle, wherein a loss factor (tanδ) of a rubber component is appropriately high, and it is possible to suppress a surge in a high frequency range while favorably maintaining a low dynamic magnification factor. The present invention relates to a vibration damping rubber composition for an electric vehicle containing: a rubber component that contains, as a main component, a mixture of a natural rubber and a non-diene-based rubber, and a vibration damping rubber member for an electric vehicle obtained by crosslinking the vibration damping rubber composition. The non-diene-based rubber is preferably butyl rubber or a halogenated butyl rubber, and the vibration damping rubber member for an electric vehicle preferably has a loss factor at 2000 Hz of 0.26 to 0.55.

## Description

### Technical Field

The present invention relates to a vibration damping rubber composition for an electric vehicle and a vibration damping rubber member for an electric vehicle obtained by crosslinking the vibration damping rubber composition.

### Background Art

A mounting component for use in an electric vehicle plays an important role to reduce vibration and noise. The electric vehicle uses an electrically powered motor as its power source, and thus an internal vibration and a resonance phenomenon are likely to occur. It is necessary to suppress the internal vibration and the resonance phenomenon. A vibration damping rubber composition is a material used to prevent transmission of vibration, and particularly, the mounting component for an electric vehicle is required to have a high-frequency vibration reduction performance. The mounting component is an important component that functions to attach important equipment such as the electrically powered motor to a vehicle body, and absorbs and disperses vibration to thereby provide a comfortable ride for users.

In the development of the vibration damping rubber composition, lowering a dynamic magnification factor is an important factor. The dynamic magnification factor (dynamic spring constant (Kd)/static spring constant (Ks)) is an indicator of flexibility of a vibration damping rubber member. The smaller the value of the dynamic magnification factor, the more the transmission of vibration can be suppressed. The development of the vibration damping rubber composition for use in the mounting component for an electric vehicle is an important technique that contributes to an improved ride comfort and a vehicle noise reduction. For example, formulations of a carbon black coupling agent are being studied (Patent Literature 1).

### Citation List

### Patent Literature

Patent Literature 1: JP 2019-178199A

### Summary of Invention

Unlike a conventional vibration damping rubber member for an engine vehicle, a vibration damping rubber member for an electric vehicle is required to cope with a high-frequency vibration (500 to 2000 Hz) generated from the electrically powered motor. However, a rubber material designed to have a low dynamic magnification factor has a small loss factor, and thus a phenomenon called surge is likley to occur in which the vibration transmission rate at a specific frequency in a high frequency range becomes very high.

In general, the loss factor and the dynamic magnification factor of the rubber material have a positive correlation. Accordingly, when the rubber material is formualted to have a large loss factor, it results in a high dynamic magnification factor and a poor vibration damping performance. An electric vehicle is required to have a silent performance, and thus a severe low dynamic magnification factor is required. For this reason, it is very difficult to lower the resonance of the rubber material by just simply increasing the loss factor.

The present invention has been made in view of the above-described circumstances, it is an object of the present invention to provide a vibration damping rubber member for an electric vehicle that has an apporpriately high loss factor (tanδ) and can suppress a surge in a high frequency range while favorably maintaining a low dynamic magnification factor.

The inventor of the present application conducted intensive studies to address the above-described object, and found that, by blending a natural rubber and a non-diene-based synthetic rubber, it is posssible to achieve an appropriately high loss factor while maintaining a low dynamic magnification factor and ensuring the vibration damping performance. In this way, the present invention has been accomplished.

The present invention provides a vibration damping rubber composition for an electric vehicle, comprising a rubber component that contains, as a main component, a mixture of a natural rubber and a non-diene-based rubber.

The present invention also provides a vibration damping rubber member for an electric vehicle obtained by crosslinking the above-described vibration damping rubber composition.

### Description of Embodiments

A vibration damping rubber composition for an electric vehicle (hereinafter referred to as "vibration damping rubber composition") according to the present invention contains a rubber component that contains, as a main component, a mixture of a natural rubber and a non-diene-based rubber. The vibration damping rubber composition for an electric vehicle according to the present invention can be used as a vibration damping rubber member for an electric vehicle (hereinafter referred to as "vibration damping rubber member") by being crosslinked and cured.

In the present invention, the term "electric vehicle" means an automobile that runs using an electrically powered machine (an electric motor) as the power source, and encompasses an electric vehicle (EV) and a fuel cell vehicle (FCV) that use only an electric motor as the power source, as well as a plug-in hybrid vehicle (PHV) and a hybrid vehicle (HV) that use an electric motor as one of power sources, and the like.

The natural rubber used in the present invention can be appropriately selected from a known natural rubber. For example, the natural rubber can be selected from ribbed smoked sheets (RSS), technically specified rubber (TSR), and the like. The amount of the natural rubber contained in the rubber component is preferably 50 mass% to 95 mass%, more preferably 70 mass% to 95 mass%, and even more preferably 90 mass% to 95 mass%.

The non-diene-based rubber used in the present invention is a synthetic rubber that has no or a very small number of double bonds in a polymer backbone. Examples of the non-diene-based rubber include: butyl rubber (IIR); halogenated butyl rubbers such as chlorinated butyl rubber (CIIR) and brominated butyl rubber (BIIR); ethylene propylene rubber (EPM); ethylene propylene diene rubber (EPDM); ethylene acrylic rubber (AEM); polyacrylic rubber (ACM); silicone rubber (VMQ); fluorine rubber (FKM); polyurethane rubber (AU); ester-based polyurethane rubber (EU); polyether ether ketone rubber (PEEK); and the like. In the present invention, in order to maintain the loss factor (tanδ) of the vibration damping rubber member obtained at an appropriately high level, the non-diene-based rubber is preferably butyl rubber or the halogenated butyl rubber, and more preferably butyl rubber.

The amount of the non-diene-based rubber contained in the rubber component is preferably 5 mass% to 50 mass%, more preferably 5 mass% to 30 mass%, and even more preferably 5 mass% to 10 mass%. By setting the amount of the non-diene-based rubber within the above-described range, it is possible to obtain a vibration damping rubber member that has an excellent balance of the dynamic magnification factor and the loss factor.

The rubber component contained in the vibration damping rubber composition according to the present invention contains, as a main component, a mixture of the natural rubber and the non-diene-based rubber. The rubber component may also contain, as another rubber, a diene-based rubber such as, for example, isoprene rubber (IR), butadiene rubber (BR), styrene-butadiene rubber (SBR), or acrylonitrile-butadiene rubber (NBR). However, in the present invention, it is preferable that the rubber component contains no diene-based rubber.

The amount of the mixture of the natural rubber and the non-diene-based rubber contained in the rubber component is preferably 80 mass% or more, and more preferably 90 mass% or more. In particular, it is even more preferable that the rubber component consists only of the natural rubber and the non-diene-based rubber because a vibration damping rubber member that has an excellent balance of the dynamic magnification factor and the loss factor can be easily obtained.

The vibration damping rubber composition according to the present invention preferably contains carbon black. There is no particular limitation on the carbon black, and known carbon black can be used. For example, carbon black of various grades such as SRF, GPF, FEF, HAF, ISAF, SAF, FT, and MT can be used. In the present invention, the vibration damping rubber composition preferably contains FT grade carbon black and/or MT grade carbon black because a reduction in the dynamic magnification factor can be expected. These may be used alone or in a combination of two or more. The blending amount of the carbon black is usually 10 to 80 parts by mass, and preferably 20 to 60 parts by mass relative to 100 parts by mass of the rubber component.

The vibration damping rubber composition according to the present invention may further contain, in addition to the rubber component and the carbon black described above, a vulcanization agent, a vulcanization accelerator, a vulcanization co-accelerator, a crosslinking agent, an oil, an anti-aging agent, and the like that are usually used in a vibration damping rubber composition.

Examples of the vulcanization agent include: sulfur; or a sulfur-containing compound such as an alkylphenol disulfide compound. In the present invention, the vulcanization agent preferably includes sulfur. From the viewpoint of favorably maintaining a desired hardness and basic physical properties such as tensile properties, the blending amount of the sulfur is usually 0.1 to 10.0 parts by mass, preferably 0.3 to 5.0 parts by mass, and more preferably 0.5 to 2.0 parts by mass relative to 100 parts by mass of the rubber component. It is also possible for the vulcanization agent to include a peroxide such as a dialkyl peroxide or a peroxyketal. In this case, the blending amount of the peroxide is usually 1.0 to 10.0 parts by mass, and preferably 2.0 to 8.0 parts by mass relative to 100 parts by mass of the rubber component.

Examples of the vulcanization accelerator include: benzothiazole-based vulcanization accelerators such as 2-mercaptobenzothiazole, dibenzothiazyl disulfide, N-cyclohexyl-2-benzothiazyl sulfenamide, N-t-butyl-2-benzothiazyl sulfenamide, and N-t-butyl-2-benzothiazyl sulfenamide; guanidine-based vulcanization accelerators such as diphenylguanidine; thiuraum-based vulcanization accelerators such as tetramethylthiuram disulfide, tetrabutylthiuram disulfide, tetradodecyl thiuraum disulfide, tetraoctyl thiuraum disulfide, and tetrabenzyl thiuraum disulfide; and the like. These may be used alone or in a combination of two or more. In the present invention, the vulcanization accelerator preferably includes the benzothiazole-based vulcanization accelerator. From the viewpoint of obtaining production workability, a desired hardness, and the like of the vibration damping rubber, and the like, the blending amount of the vulcanization accelerator is preferably 0.5 to 10 parts by mass, and more preferably 1 to 5 parts by mass relative to 100 parts by mass of the rubber component.

Examples of the vulcanization co-accelerator include zinc white (ZnO), a fatty acid, or the like can be used. The fatty acid may be any one of a saturated fatty acid, an unsaturated fatty acid, a straight chain fatty acid, and a branched chain fatty acid. There is no particular limitation on the number of carbon atoms. The fatty acid has, for example, 1 to 30 carbon atoms, and preferably 15 to 30 carbon atoms. More specifically, examples of the fatty acid include: cyclohexanoic acid (cyclohexanecarboxylic acid); naphthenic acids with a side chain such as alkylcyclopentane; saturated fatty acids such as hexanoic acid, octanoic acid, decanoic acid (including a branched carboxylic acid such as neodecanoic acid), dodecanoic acid, tetradecanoic acid, hexadecanoic acid, octadecanoic acid (stearic acid); unsaturated fatty acids such as methacrylic acid, oleic acid, linoleic acid, and linolenic acid; resin acids such as rosin, tall oil acid, and abietic acid; and the like. These may be used alone or in a combination of two or more. In the present invention, the vulcanization accelerating assistant agent preferably includes zinc white and/or stearic acid. From the viewpoint of obtaining production workability, a desired hardness, and the like of the vibration damping rubber, and the like, the blending amount of the vulcanization co-accelerator is preferably 1 to 10 parts by mass, and more preferably 2 to 8 parts by mass relative to 100 parts by mass of the rubber component.

Examples of the crosslinking agent include a bismaleimide compound, a phenol resin, or the like. Examples of the bismaleimide compound include N,N'-o-phenylene bismaleimide, N,N'-m-phenylene bismaleimide, N,N'-p-phenylene bismaleimide, N,N'-(4,4'-diphenylmethane) bismaleimide, 2,2-bis-[4-(4-maleimidephenoxy)phenyl]propane, bis(3-ethyl-5-methyl-4-maleimidephenyl)methane, and the like. In the present invention, from the viewpoint of storage stability, it is preferable for the crosslinking agent to include the bismaleimide compound. The blending amount of the bismaleimide compound is preferably 0.5 to 5.0 parts by mass, and more preferably 0.5 to 3.0 parts by mass relative to 100 parts by mass of the rubber component.

Examples of the oil include: a processed oil such as aromatic oil, naphthenic oil, or paraffin oil; a vegetable oil such as coconut oil; a synthetic oil such as alkylbenzene oil; castor oil, or the like can be used. These may be used alone or in a combination of two or more. The blending amount of the oil is preferably 0.5 to 10 parts by mass, and more preferably 1 to 5 parts by mass relative to 100 parts by mass of the rubber component.

Examples of the anti-aging agent include a phenol-based anti-aging agent, an imidazole-based anti-aging agent, an amine-based anti-aging agent, a wax, or the like. These may be used alone or in a combination of two or more. The blending amount of the anti-aging agent is preferably 0.5 to 10 parts by mass, more preferably 1 to 5 parts by mass, and even more preferably 1 to 3 parts by mass relative to 100 parts by mass of the rubber component.

Other additives that are usually used in rubber products can also be added as appropriate as long as the advantageous effects of the present invention are not impaired. Examples of the additives include an antioxidant, a foaming agent, a plasticizer, a lubricant, a tackifier, a petroleum-based resin, a UV absorber, a dispersing agent, a compatibilizer, a homogenizer, and the like.

There is no particular limitation on the method for blending each of the above-described components to obtain the vibration damping rubber composition according to the present invention. All component materials may be blended and kneaded at a time, or each of the components may be blended and kneaded in two or three batches. A kneading machine such as a roll, an internal mixer, or a banbury rotor can be used to knead the components. Furthermore, a known molding machine such as an extrusion molding machine or a press machine may be used to mold the vibration damping rubber composition into a sheet, a strip, or the like.

The vibration damping rubber member for an electric vehicle according to the present invention is obtained by crosslinking (vulcanizing) the above-described vibration damping rubber composition. Although not particularly limited, the vibration damping rubber composition is vulcanized usually at 140°C to 180°C for 5 to 120 minutes to cure the vibration damping rubber composition to obtain a vibration damping rubber member. The obtained vibration damping rubber member is a product obtained using the above-described vibration damping rubber composition according to the present invention, and it is therefore possible to achieve both a low dynamic magnification factor and rubber surge suppression in a high frequency range.

As described above, in order to suppress a surge in a high frequency range and achieve a low dynamic magnification factor, it is necessary to adjust the loss factor (tanδ) in a high frequency range of the vibration damping rubber member to an appropriately high level. Specifically, when the loss factor tanδ at 2000 Hz is adjusted to 0.26 to 0.55, a large effect can be obtained. It is more preferable to adjust the loss factor tanδ at 2000 Hz to 0.28 to 0.40. A sudden surge is more likely to occur as the loss factor tanδ is lower. When the loss factor tanδ is less than 0.26, the resonance magnification will be very high. On the other hand, the surge can be suppressed more as the loss factor tanδ is higher. However, when the loss factor tanδ is greater than 0.60, the effect is reduced. Furthermore, the dynamic magnification factor will be high, which also increases the transmission coefficient in the entire frequency range. Accordingly, it is very difficult to achieve the silent performance required for the electric vehicle.

The loss factor tanδ of the vibration damping rubber member increases as the amount of the non-diene-based rubber contained in the rubber component is higher. Accordingly, the loss factor tanδ of the rubber component can be adjusted by adjusting the amount of the non-diene-based rubber. Also, the loss factor tanδ can also be adjusted using the above-described crosslinking agent. However, the crosslinking agent is likely to affect other physical properties of the vibration damping rubber member. Accordingly, the amount of the crosslinking agent used is preferably adjusted to a minimal level.

The loss factor tanδ can be measured using a dynamic viscoelasticity measuring device. However, due to the specifications of the device, it is difficult to measure the loss factor tanδ at a high frequency. For this reason, the loss factor tanδ at 2000 Hz can be obtained by creating a tanδ master curve at a reference temperature of 20°C and performing calculation based on the temperature-time conversion rule (WLF rule). In the present invention, the loss factor tanδ is a value measured in accordance with JIS K 7244-1.

In the present invention, a ratio (Kd100/Ks) of a dynamic spring constant at 100 Hz relative to a static spring constant of the vibration damping rubber member, or in other words, dynamic magnification factor is preferably 1.2 to 1.5. When the dynamic magnification factor is greater than 1.5, it results in a poor vibration damping performance, and thus a dynamic magnification factor of greater than 1.5 is not preferred. There is a tendency in which the dynamic magnification factor increases as the amount of the non-diene-based rubber used increases. However, an increase in the dynamic magnification factor can be suppressed by appropriately selecting the type of carbon black and the amount of carbon black used.

The vibration damping rubber member for an electric vehicle according to the present invention can be preferably used as a motor mount, a suspension bush, a subframe mount, and the like for an electric vehicle. In particular, by using the vibration damping rubber member for an electric vehicle according to the present invention as a motor mount for an electric vehicle, a high-frequency vibration (500 to 2000 Hz) generated from the electrically powered motor can be effectively reduced.

### Examples

Hereinafter the present invention will be described specifically based on examples and comparative examples. However, the present invention is not limited to the examples shown below.

### [Examples 1 to 4 and Comparative Examples 1 and 2]

A vibration damping rubber composition in each of examples and comparative examples was produced by kneading components at a blending ratio shown in Table 1. Kneading was performed in two batches in such a manner that materials other than sulfur, a crosslinking agent, a vulcanization accelerator, and a vulcanization co-accelerator were mixed at 120°C discharge for 3 minutes using a banbury mixer, and after that, sulfur, a crosslinking agent, a vulcanization accelerator, and a vulcanization co-accelerator were added and mixed at 90°C for 2 minutes using a banbury mixer.

The obtained vibration damping rubber composition was subjected to press vulcanization under a condition of 155°C and 15 minutes to produce a cylindrical molded body (a vibration damping rubber member) with a diameter φ of 8 mm and a height of 5.9 mm. The loss factor tanδ was measured using the obtained molded body. First, dynamic viscoelasticity was measured at a strain of 0.1% in accordance with JIS K 7244-1 using ARES-G2 available from TA Instruments to create a tanδ master curve at a reference temperature of 20°C. Next, the loss factor tanδ at 2000 Hz was determined from the created master curve based on the temperature-time conversion rule (WLF rule). The results are shown in Table 1.

Also, the obtained vibration damping rubber composition was subjected to press vulcanization under a condition of 155°C and 30 minutes to produce a cylindrical molded body (a vibration damping rubber member) with a diameter φ of 30 mm and a height of 30 mm. Using the molded body, the static spring constant (Ks) and the dynamic spring constant (Kd100) at a frequency of 100 Hz were measured in accordance with JIS K 6385, and the dynamic magnification factor (Kd100/Ks) was calculated. The results are shown in Table 1.

Details of the components listed in Table 1 are as follows.
Natural rubber : RSS#4
Diene-based rubber: polybutadiene rubber (BR), BR01 available from JSR Corporation Non-diene-based rubber: chlorinated butyl rubber (CIIR), CIIR 1066 available from ENEOS Materials Corporation
Carbon black: FT grade carbon black, Asahi #8 available from Asahi Carbon Co., Ltd. Stearic acid: Stearic Acid 50S available from New Japan Chemical Co., Ltd.
Wax: SUNTIGHT S available from Seiko Chemical Co., Ltd.
Anti-aging agent: Nocrac 6C available from Ouchi Shinko Chemical Industrial Co., Ltd.
Oil: SUNTHENE 4240 available from SUNOCO Inc.
Maleimide: BMI-3000H available from Daiwakasei Industry Co., Ltd.
Phenol resin: CASHEW RESIN 5208 available from Cashew Co., Ltd.
Zinc white: Zinc White No. 3 available from Hakusui Tech Co., Ltd.
Sulfur: Powdered Sulfur available from Tsurumi Chemical Industry Co., Ltd.
Vulcanization accelerator CZ: Nocceler CZ-G available from Ouchi Shinko Chemical Industrial Co., Ltd.
Vulcanization accelerator PX: Nocceler PX available from Ouchi Shinko Chemical Industrial Co., Ltd.
Vulcanization accelerator TBT: Nocceler TBT available from Ouchi Shinko Chemical Industrial Co., Ltd.
Vulcanization accelerator NS: Nocceler NS-F available from Ouchi Shinko Chemical Industrial Co., Ltd.

**[Table 1]**

| | Comp. Ex. 1 | Comp. Ex. 2 | Example 1 | Example 2 | Example 3 | Example 4 |
|---|---|---|---|---|---|---|
| Natural rubber | 60 | 100 | 95 | 90 | 90 | 90 |
| Non-diene-based rubber | | | 5 | 10 | 10 | 10 |
| Diene-based rubber | 40 | | | | | |
| Carbon black | 30 | 55 | 48 | 48 | 57 | 48 |
| Stearic acid | 2 | 2 | 1 | 1 | 1 | 1 |
| Wax | 1.5 | 1.5 | 1.5 | 1.5 | 1.5 | 1.5 |
| Anti-aging agent | 1.5 | 1.5 | 1.5 | 1.5 | 1.5 | 1.5 |
| Oil | 17 | 2 | 2 | 2 | 2 | 2 |
| Sulfur | 1.6 | 1.2 | 1 | 1 | 1 | 0.2 |
| Maleimide | | | 1.2 | 1.2 | 1.2 | 1 |
| Phenol resin | | | | | 3 | |
| Zinc white | 5 | 5 | 5 | 5 | 5 | 5 |
| Vulcanization accelerator CZ | | | 1.5 | 1.5 | 1.5 | 2 |
| Vulcanization accelerator PX | | | 1.25 | 1.25 | 1.25 | |
| Vulcanization accelerator TBT | 1.2 | 1 | | | | 1.5 |
| Vulcanization accelerator NS | 2.1 | 1.6 | | | | |
| tanδ (2000 Hz) | 0.119 | 0.252 | 0.292 | 0.326 | 0.396 | 0.325 |
| Kd100/Ks | 1.25 | 1.39 | 1.33 | 1.40 | 1.45 | 1.45 |

As shown in Table 1, it can be seen that, in the vibration damping rubber members of Examples 1 to 4 obtained using a mixture of a natural rubber and a non-diene-based rubber as the rubber component, the loss factor (tanδ) is appropriately high, and a low dynamic magnification factor is maintained.

### Industrial Applicability

According to the present invention, it is possible to provide a vibration damping rubber member for an electric vehicle that has an apporpriately high loss factor and can suppress a rubber surge in a high frequency range while favorably maintaining a low dynamic magnification factor.

## Claims

1. A vibration damping rubber composition for an electric vehicle, comprising a rubber component that contains, as a main component, a mixture of a natural rubber and a non-diene-based rubber.

2. The vibration damping rubber composition according to claim 1, wherein an amount of the non-diene-based rubber contained in the rubber component is 5 mass% to 50 mass%.

3. The vibration damping rubber composition according to claim 1, wherein the non-diene-based rubber is butyl rubber or a halogenated butyl rubber.

4. The vibration damping rubber composition according to claim 1, wherein the rubber component consists only of the natural rubber and the non-diene-based rubber.

5. A vibration damping rubber member for an electric vehicle obtained by crosslinking the vibration damping rubber composition according to any one of claims 1 to 4.

6. The vibration damping rubber member for an electric vehicle according to claim 5,
wherein the vibration damping rubber member has a loss factor (tanδ) at 2000 Hz of 0.26 to 0.55, the loss factor (tanδ) at 2000 Hz being measured in accordance with JIS K 7244-1 and determined at a reference temperature of 20°C and a measurement strain of 0.1% based on a temperature-time conversion rule (WLF rule).

7. The vibration damping rubber member for an electric vehicle according to claim 5,
wherein a ratio (Kd100/Ks) of a dynamic spring constant at 100 Hz relative to a static spring constant is 1.2 to 1.5.
